# EUROPÄISCHE PATENTANMELDUNG

(11) **EP 0 695 792 A1**
(43) Veröffentlichungstag der Anmeldung: **07.02.1996**
(21) Anmeldenummer: 95111318.2
(22) Anmeldetag: 19.07.1995
(51) Int. Cl.: C09D 167/00

(54) **Wässrige Bindemittelkombinationen und ihre Verwendung**

(30) Priorität: 01.08.1994 DE 4427227
(71) Anmelder: BAYER AG, D-51368 Leverkusen (DE)
(72) Erfinder: Schneider, Volker, Dr., D-47669 Wachtendonk (DE); Blum, Harald, Dr., D-47669 Wachtendonk (DE); Kahl, Lothar, Dr., D-51465 Bergisch Gladbach (DE); Schmitz, Hans-Günter, D-47445 Moers (DE); Yuva, Nusret, D-42799 Leichlingen (DE)

(57) **Zusammenfassung**

Eine wäßrige Bindemittelkombination aus A) einem wasserverdünnbaren, Polymerisat-modifizierten Polyesterharz und B) einem hitzeaktivierbaren Vernetzerharz und ihre Verwendung in hitzehärtebaren Beschichtungsmitteln.

## Beschreibung

Die Erfindung betrifft wäßrige Bindemittelkombinationen auf Basis von in Wasser dispergierbaren bzw. in Wasser löslichen, Hydroxylgruppen enthaltenden, Polymerisat-modifizierten Polyesterharzen auf Basis von zur Copolymerisation mit olefinischen Monomeren befähigten olefinisch ungesättigten Polyesterharzen und mindestens einem hitzeaktivierbaren Vernetzerharz, sowie die Verwendung der Bindemittelkombinationen in hitzehärtenden Beschichtungsmitteln.

Moderne, wäßrige Bindemittel sind in der Lage, in vielen Anwendungen organisch gelöste Bindemittel zu substituieren. Bei manchen Anwendungen derartiger Lacke, wie z.B. der Industrie- oder Automobillackierung werden die hohen Anforderungen sowohl an die gebrauchsfertigen Beschichtungsmittel als auch an die resultierenden Beschichtungen noch nicht voll erreicht. Für diese Anwendungszwecke werden gute filmoptische Eigenschaften, wie hoher Glanz und guter Verlauf, gefordert. Neben den guten optischen Eigenschaften rücken in zunehmendem Maße auch Forderungen nach hoher Chemikalien- und Lösemittel- bzw. Superbenzinfestigkeit, einer guten Schwitzwasserbeständigkeit und einer geringen Vergilbungsneigung, speziell beim Überbrennen, in den Vordergrund. Darüber hinaus sollen moderne, wäßrige Bindemittel möglichst wenig organische Hilfslösemittel enthalten, um auch strengeren Maßstäben bezüglich Umweltverträglichkeit gerecht zu werden.

In der DE-A-28 24 418 werden spezielle carboxylgruppenhaltige Polyester mit einer Säurezahl von 30 bis 150 beschrieben, die mit Aminharzen, Phenolharzen und/oder blockierten Polyisocyanaten thermisch vernetzt werden können. Ein Nachteil dieser Harze für den konventionellen Einsatz ist, daß zur Herstellung von beständigen Lösungen des hochmolekularen Polyesters alkoholische oder glykolische Lösemittel eingesetzt werden müssen und bei längerer Lagerung von den Dispersionen, die nach Neutralisation mit Aminen in Wasser hergestellt werden, ein Molekülabbau durch Verseifung stattfindet. Sie zeigen ohne Zusatz von organischen Colösemitteln einen hohen "Wasserberg", der die Ursache für niedrige Lackfestkörper ist.

In der DE-A-32 13 160 werden als Bindemittel Mischungen von säurefunktionellen Polyestern und säurefunktionellen Acrylcopolymerisaten beschrieben. Dabei werden die Acrylcopolymerisate separat in Lösung oder als Emulsionscopolymerisat hergestellt. Auch bei diesen Dispersionen besteht für den Polyesteranteil die Gefahr des Molekülabbaus durch Verseifung.

In der EP-A-03 91 271 werden Einbrennlacke auf Basis von Polyesteroligomer-Polyacrylat-Harzen beschrieben, bei denen die Harze in organischer Lösung hergestellt, mit Aminoharzvernetzern gemischt und anschließend in Wasser dispergiert werden. Die konkret in den Ausführungsbeispielen beschriebene Herstellung der Harze erfolgt dergestalt, daß der Polyacrylatteil in Gegenwart von speziellen, radikalisch nicht polymerisierbaren Polyesteroligomeren mit einem mittleren Molekulargewicht (nach T.C. Patton, Alkyd Resin Technology "Formulating Techniques and Allied Calculations", 1962, Seite 106 ff.) von 200 bis 1000, einer OH-Zahl von 280 bis 600 mg KOH/g Substanz und einer Säurezahl von 0 bis 1,5 mg KOH/g Substanz polymerisiert wird.

In der DE-A-42 23 182 werden Polyesteroligomer-Polyacrylat-Dispersionen mit den gleichen Spezifikationen wie in DE-A-39 10 829 beschrieben, die mit einer speziellen Vernetzermischung aus Aminoharzen und blockierten Polyisocyanaten als Einbrennbeschichtungen mit verbesserter Schwefelsäurebestandigkeit eingesetzt werden.

Die Erfahrung zeigt, daß bei Polyester-Polyacrylat-Dispersionen, bei denen der Polyester- und der Polyacrylatteil nicht zumindest teilweise chemisch miteinander verknüpft sind, Probleme bezüglich der Lagerstabilität auftreten können. Außerdem enthalten die beschriebenen Beschichtungsmittel noch erhebliche Mengen an organischen Colösern.

Die DE-A-41 37 896 beschreibt wäßrige Bindemittelkombinationen auf Basis von wäßrigen Lösungen oder Dispersionen von organischen Polyhydroxylverbindungen und Polyisocyanaten mit freien Isocyanatgruppen, wobei als Polyhydroxylverbindungen Carboxylat- und Hydroxylgruppen aufweisende, mit Vinylmonomeren "gepfropfte" Polyesterharze eingesetzt werden. Bei diesen mit Vinylmonomeren "gepfropften" Polyesterharzen handelt es sich um Polymerisat-modifizierte Polyesterharze, die durch Copolymerisation von olefinisch ungesättigten Monomeren in Gegenwart von zur Copolymerisation befähigten olefinisch ungesättigten Polyesterharzen hergestellt worden sind, d.h. um Verbindungen, wie sie auch erfindungsgemäß eingesetzt werden. Dieser Vorveröffentlichung, die sich in erster Linie mit bei Raumtemperatur auszuhärtenden Zweikomponenten-Polyurethanlacken befaßt, konnte naturgemäß keinerlei Hinweis darauf entnommen werden, daß zur Herstellung von hochwertigen Einbrennlacken, die zu Lacküberzügen einer verbesserten Vergilbungsresistenz beim Überbrennen führen, die Verwendung von ebensolchen Polymerisat-modifizierten Polyesterharzen anstelle der in den vorgenannten Vorveröffentlichungen beschriebenen Polyesterharze erforderlich ist.

Wie jetzt überraschend gefunden wurde, stellen Kombinationen von Polymerisat-modifizierten Polyesterharzen der nachstehend näher beschriebenen Art mit hitzeaktivierbaren Vernetzerharzen der an sich bekannten Art in Wasser lösliche bzw. dispergierbare Bindemittelkombinationen dar, die auch beim Überbrennen der entsprechenden Beschichtungsmittel eine besonders geringe Vergilbungsneigung aufweisen und darüberhinaus gute filmoptische Eigenschaften mit guter Chemikalien-, Lösemittel- und Wasserfestigkeit der resultierenden Lackfilme vereinen.

Die neuen Bindemittelkombinationen sind nicht nur mit Wasser, sondern auch mit den übrigen Lackkomponenten sehr gut verträglich, enthalten wenig flüchtige organische Substanzen und können zu hochwertigen, lagerstabilen, wäßrigen Beschichtungsmitteln und Dichtmassen verarbeitet werden.

Gegenstand der Erfindung ist eine wäßrige Bindemittelkombination für vergilbungsarme Einbrennlacke, bestehend im wesentlichen aus:
A) 20 - 95 Gew.-% einer in Form einer wäßrigen Lösung oder Dispersion vorliegenden, wasserverdünnbaren, organischen Polyolkomponente und
B) 5 - 80 Gew.-% mindestens eines hitzeaktivierbaren Vernetzerharzes,
dadurch gekennzeichnet, daß die in A) vorliegende Polyolkomponente im wesentlichen aus mindestens einem Carboxylat- und Hydroxylgruppen aufweisenden, Polymerisat-modifizierten Polyesterharz besteht, welches durch Polymerisation von olefinisch ungesättigten Monomeren in Gegenwart eines zur Copolymerisation mit den Monomeren befähigten ungesättigten Polyesterharzes hergestellt worden ist, wobei sich die Gewichtsprozentangaben jeweils auf den Gesamtfestkörpergehalt von A) und B) beziehen und zusammen 100 % ergeben.

Gegenstand der Erfindung ist insbesondere eine derartige wäßrige Bindemittelkombination, die dadurch gekennzeichnet ist, daß das Polymerisat-modifizierte Polyesterharz der Bindemittelkomponente A) ein Molekulargewicht Mn von 1000 bis 50000, eine Hydroxylzahl von 20 bis 300 mg KOH/g Substanz und eine Säurezahl von 10 bis 80 mg KOH/g Substanz aufweist, wobei 25 bis 100 % der diese Säurezahl bewirkenden Carboxylgruppen in der Carboxylatform vorliegen und das Umsetzungsprodukt aus
I. 99 - 2 Gew.-% einer Monomerenmischung aus:
   I.1) 1 - 100 Gew.-% α,β-ungesättigter Mono- und/oder Dicarbonsäuren mit 3 bis 16 C-Atomen,
   I.2) 0 - 70 Gew.-% hydroxyfunktioneller Alkylester der (Meth)-acrylsäure mit gegebenenfalls Ethergruppen aufweisenden Hydroxyalkylresten mit 2 bis 12 Kohlenstoffatomen,
   I.3) 0 - 98 Gew.-% (Meth)acrylsäure(cyclo)alkylester mit 1 bis 20 C-Atomen im Alkylrest und
   I.4) 0 - 80 Gew.-% anderer copolymerisierbarer Verbindungen,
   wobei sich die zu I.1) bis I.4) gemachten Prozentangaben zu 100 % ergänzen, und
II. 1 - 98 Gew.-% eines Polyesterpolyols mit einer Hydroxylzahl von 10 bis 500 mg KOH/g Substanz, einer Säurezahl von < 30 mg KOH/g Substanz und einem Gehalt an Doppelbindungen (berechnet als C=C, Molekulargewicht = 24) von 0,01 bis 15 Gew.-%
darstellt, wobei sich die zu I. und II. gemachten Prozentangaben zu 100 % ergänzen, und daß die Vernetzerkomponente B) ein hitzeaktivierbares Aminoharz, ein blockiertes Polyisocyanatharz oder eine Mischung daraus ist.

Gegenstand der Erfindung ist auch die Verwendung der erfindungsgemäßen Bindemittelkombinationen, gegebenenfalls in Kombination mit anderen Hydroxylgruppen aufweisenden Lackharzen in, gegebenenfalls die üblichen Hilfs- und Zusatzstoffe der Lacktechnologie enthaltenden, hitzehärtenden Beschichtungsmitteln, insbesondere in hitzehärtenden Klarlacken.

Bei der Komponente A) handelt es sich um eine wäßrige Lösung oder Dispersion einer Polyolkomponente mit einen Wassergehalt von 35 bis 85 Gew.-%, vorzugsweise 47 bis 75 Gew.-%, einer Viskosität bei 23°C von 10 bis 30000, vorzugsweise 50 bis 10000 mPa.s und einem pH-Wert von 5 bis 10, vorzugsweise von 6 bis 9.

Die in der wäßrigen Lösung oder Dispersion gelöst und/oder dispergiert vorliegende Polyolkomponente besteht im wesentlichen, d.h. zu mindestens 51 Gew.-%, vorzugsweise zumindest zu 80 Gew.-% und besonders bevorzugt zu 100 Gew.-% aus mindestens einem Polymerisat-modifizierten Polyesterharz welches ein mittleres Molekulargewicht Mn (Zahlenmittel) von 1000 bis 50000, vorzugsweise 1500 bis 25000, eine Hydroxylzahl von 20 bis 300, vorzugsweise 45 bis 200 mg KOH/g Substanz (d.h. Festharz) und eine Säurezahl (bezogen auf alle Carboxylgruppen, die dabei zu 25 bis 100, vorzugsweise zu 40 bis 100 % in Carboxylatform vorliegen) von 10 bis 80, vorzugsweise von 14 bis 45 mg KOH/g Substanz aufweist. Das Molekulargewicht des Polymerisat-modifizierten Polyesterharzes kann gelpermeationschromatographisch unter Verwendung von geeichtem Styrol als Standard bestimmt werden. Die Herstellung der Polymerisat-modifizierten Polyesterharze erfolgt durch an sich bekannte Copolymerisation von olefinisch ungesättigten Monomeren in Gegenwart von olefinisch ungesättigten Polyesterharzen der nachstehend näher beschriebenen Art.

Außer den Polymerisat-modifizierten Polyesterharzen kann die Polyolkomponente auch noch andere wasserverdünnbare Polyhydroxylverbindungen, die in wäßriger Lösung oder Dispersion mit den erfindungswesentlichen gepfropften Polyesterharzen verträglich sind, umfassen. Beispielhaft genannt seien insbesondere wasserlösliche, gegebenenfalls Ethergruppen aufweisende, mehrwertige Alkohole des Molekulargewichtsbereichs 62 bis 1000, vorzugsweise 62 bis 400, wie z.B. Ethylenglykol, Propylenglykol, Glycerin, Trimethylolpropan, die niedermolekularen, wasserlöslichen Ethoxylierungs und/oder Propoxylierungsprodukte dieser mehrwertigen Alkohole oder beliebige Gemische derartiger Verbindungen.

In Abhängigkeit vom Molekulargewicht der den Hauptbestandteil der Polyolkomponente bildenden Polymerisat-modifizierten Polyesterharze, ihrem Gehalt an Carboxyl- bzw. Carboxylatgruppen sowie von der Art des eingesetzten Neutralisationsmittels und der gegebenenfalls mitverwendeten Hilfslösemittel liegen die Polyesterharze als Lösung oder als Dispersion vor, im allgemeinen sind jedoch sowohl gelöste als auch dispergierte Anteile vorhanden.

Die Herstellung der Carboxylat- und Hydroxylgruppen enthaltenden, Polymerisat-modifizierten Polyesterharze erfolgt durch die Polymerisation einer säuregruppenhaltigen Monomerenmischung I in einem Polyesterharz II.

Der in der vorliegenden Beschreibung und den Patentansprüchen verwendete Ausdruck (Meth)acrylat bedeutet Acrylat und/oder Methacrylat.

Üblicherweise werden
I. 99 bis 2 %, bevorzugt 95 bis 10 %, besonders bevorzugt 85 bis 25 %, einer Monomerenmischung aus
   I.1) 1 - 100 %, bevorzugt 1 - 25 %, besonders bevorzugt 1,5 - 10 %, α,β-ungesättigter Mono- oder Dicarbonsäure mit 3 bis 16, vorzugsweise 3 bis 4 Kohlenstoffatomen,
   I.2) 0 - 70 %, bevorzugt 3 - 50 %, besonders bevorzugt 5 - 35 %, hydroxyfunktioneller Ester einer ungesättigten C₃-C₆-Carbonsäure, insbesondere der (Meth)acrylsäure, vorzugsweise hydroxyfunktioneller Ester der genannten Säuren, die einen, gegebenenfalls Ethergruppen aufweisenden Hydroxyalkylrest mit 2 bis 12 Kohlenstoffatomen aufweisen, insbesondere hydroxyfunktioneller Ester der genannten Säuren mit 2 bis 6 Kohlenstoffatomen im Hydroxyalkylrest,
   I.3) 0 - 98 %, bevorzugt 5 - 80 %, besonders bevorzugt 10 - 70 % (Meth)acrylsäure(cyclo)alkylrest mit 1 bis 20, vorzugsweise 1 bis 18 Kohlenstoffatomen im Alkylrest und
   I.4) 0 - 80 %, bevorzugt 0 - 60 %, besonders bevorzugt 0 - 40 %, anderer copolymerisierbarer Verbindungen,
   wobei sich die zu I.1) bis I.4) genannten Prozentangaben auf das Gewicht beziehen und zu 100 % ergänzen,
   in Gegenwart von
II. 1 - 98 %, bevorzugt 5 - 90 %, besonders bevorzugt 15 - 75 % eines Polyesterpolyols mit einer Hydroxylzahl von 10 - 500, vorzugsweise von 80 - 350 mg KOH/g Substanz, einer Säurezahl von 0 - 30, vorzugsweise 1,5 - 15; besonders bevorzugt 1,5 - 10 mg KOH/g Substanz und einem Gehalt an Doppelbindungen (berechnet als C=C, Molekulargewicht = 24) von 0,01 bis 15 %, vorzugsweise von 0,01 bis 10 %, besonders bevorzugt von 0,1 bis 5 % und einem mittleren Molekulargewicht (nach T.C. Patton, Alkyd Resin Technology "Formulating Techniques and Allied Calculations", 1962, Seite 106 ff.) von 200 bis 5000, vorzugsweise von 500 bis 3000, besonders bevorzugt von über 1000 bis 2000.
polymerisiert, wobei sich die zu I. und II. gemachten Prozentangaben auf das Gewicht beziehen und zu 100 % ergänzen.

Zur Herstellung der Carboxylat- und Hydroxylgruppen enthaltenden, Polymerisat-modifizierten Polyesterharze kann als Komponente I.1) jedes, mindestens eine Carboxylgruppe pro Molekül tragende, den gemachten Angaben entsprechende, ungesättigte Monomere oder ein Gemisch aus solchen Monomeren eingesetzt werden. Als Komponenten I.1) werden vorzugsweise Acrylsäure und/oder Methacrylsäure eingesetzt.

Es können aber auch andere ethylenisch ungesättigte Säuren, wie z. B. Ethylacrylsäure, Crotonsäure, Maleinsäure, Fumarsäure und Itaconsäure oder auch z.B. Maleinsäuremono(meth)-acryloyloxiethylester, Bernsteinsäuremono(meth)-acryloyloxiethylester und Phthalsäuremono-(meth)acryloyloxiethylester eingesetzt werden.

Als Komponente I.2) können alle copolymerisierbaren, ethylenisch ungesättigten Monomere, die mindestens eine Hydroxylgruppe pro Molekül tragen oder ein Gemisch aus solchen Monomeren eingesetzt werden. Als Beispiele werden Hydroxyalkylester der Acrylsäure, Methacrylsäure oder einer anderen α,β-ethylenisch ungesättigten Carbonsäure genannt. Diese Ester können sich von einem Polyalkylenglykol mit insbesondere bis zu 12 Kohlenstoffatomen ableiten, das mit der Säure verestert ist, oder sie können durch Umsetzung der Säure mit einem Alkylenoxid erhalten werden. Als Beispiel für diese Ester sei das Polyethylglykolmono(meth)acrylat mit bis zu 12 Kohlenstoffatomen im Polyethylenglykol-Rest genannt. Als Komponente I.2) werden vorzugsweise Hydroxyalkylester der Acrylsäure und Methacrylsäure oder Mischungen aus diesen Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül, können prinzipiell auch eingesetzt werden. Die bevorzugten Monomeren der Gruppe I.2) weisen 5 bis 20 Kohlenstoffatome pro Molekül auf. Besonders bevorzugt handelt es sich um Hydroxyalkylester der genannten Säuren mit 2 bis 6 Kohlenstoffatomen im Hydroxyalkylrest.

Als Komponente I.3) kann jeder copolymerisierbare (Cyclo)alkylester der (Meth)acrylsäure mit 1 bis 20 Kohlenstoffatomen im (Cyclo)alkylrest oder ein Gemisch aus solchen (Meth)acrylsäureestern eingesetzt werden. In Betracht kommen insbesondere Alkyl(meth)acrylate mit 1 bis 18 Kohlenstoffatomen im Alkylrest. Als Beispiele seien Methyl-, Ethyl-, n-Propyl-, n-Butyl-, n-Hexyl-, 2-Ethylhexyl-, n-Stearyl- und n-Lauryl(meth)acrylat oder auch cycloaliphatische (Meth)acrylsäureester, wie z. B. Cyclohexyl(meth)acrylat, genannt.

Als Komponente I.4) können alle mit I.1, I.2 und I.3 copolymerisierbaren, auch mehrfach ethylenisch ungesättigten Verbindungen, oder ein Gemisch aus solchen Verbindungen, eingesetzt werden. Beispiele hierfür sind Styrol, α-Styrol, Vinyltoluol, Vinylpyrrolidon, Vinylether, Vinylester, Divinylbenzol, Di(meth)acrylsäureester von Diolen, wie z. B. Ethandiol, 1,3-Propandiol und 1,4-Butandiol. Grundsätzlich können jeweils beliebige Gemische der beispielhaft unter I.1) bis I.4) genannten Monomeren eingesetzt werden.

Die als Komponente II eingesetzten Polyesterpolyole werden durch eine an sich bekannte Polykondensation von
II.1) 0 bis 60 Gew.-% an gesättigten aliphatischen, oder aromatischen Monocarbonsäuren,
II.2) 10 bis 65 Gew.-% an gesättigten aliphatischen oder aromatischen Di-, Tri-, Tetracarbonsäuren und/oder an einer entsprechenden Menge an Anhydriden derartiger Säuren,
II.3) 15 bis 70 Gew.-% an di- und/oder höherfunktionellen Alkoholen,
II.4) 0 bis 30 Gew.-% einwertiger Alkoholen,
II.5) insgesamt 0 bis 25 Gew.-% an Hydroxycarbonsäuren, Lactonen, Aminoalkoholen und/oder Aminocarbonsäuren und
II.6) 0,04 bis 60 Gew.-% an (cyclo)aliphatischen, olefinisch ungesättigten Mono- oder Dicarbonsäuren hergestellt, wobei sich die zu II.1) bis II.6) gemachten Prozentangaben zu 100 % ergänzen, und wobei die Umsetzung gegebenenfalls unter Zuhilfenahme von üblichen Veresterungskatalysatoren, vorzugsweise nach dem Prinzip einer Schmelz- oder Azeotropkondensation bei Temperaturen von 140 bis 240°C unter Wasserabspaltung erfolgt.

Im Falle einer azeotropen Veresterung wird das Schleppmittel, üblicherweise Isooctan, Toluol, Xylol oder Cyclohexan nach beendeter Reaktion im Vakuum destilliert.

Bei der Ausgangskomponente II.1) handelt es sich eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren, wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure sowie Gemische dieser oder anderer Monocarbonsäuren.

Bei der Ausgangskomponente II.2) handelt es sich um Di-, Tri- und/oder Tetracarbonsäuren bzw. deren Anhydride des Molekülargewichtsbereichs 98 bis 600. Geeignet sind z. B. Phthalsäure(anhydrid), Isophthalsäure, Terephthalsäure, Hexahydrophthalsäure(anhydrid), Bernsteinsäure(anhydrid), Adipinsäure, Sebacinsäure, Azelainsäure, Dimerfettsäure, Trimerfettsäure, Trimellithsäure(anhydrid), Pyromellithsäure(anhydrid) oder Gemische dieser oder anderer Säuren.

Bei der Ausgangskomponente II.3) handelt es sich um Diole, Triole, Tetraole bzw. höherwertige Alkoholkomponenten des Molekülargewichtsbereichs 62 bis 400. Geeignet sind z. B. Ethylenglykol, 1,2- und 1,3-Propylenglykol, 1,3-, 1,4-, 2,3-Butandiol, 1,6-Hexandiol, Trimethylhexandiol, Diethylenglykol, Triethylenglykol, Neopentylglykol, hydrierte Bisphenole, 1,4-Cyclohexandiol, 1,4-Cyclohexandimethanol, Trimethylolpropan, Glycerin, Pentaerythrit, Trimethylpentandiol, Dipentaerythrit und Gemische dieser oder anderer mehrwertiger Alkohole.

Bei der Ausgangskomponente II.4) handelt es sich um Monoalkohole des Molekülargewichtsbereichs 100 bis 290, wie z. B. n-Hexanol, Cyclohexanol, Decanol, Dodecanol, Tetradecanol, Octanol, Octadecanol, natürliche Fettalkoholgemische, wie z. B. Ocenol® 110/130 (Fa. Henkel) und Gemische dieser oder anderer Alkohole.

Bei der Ausgangskomponente II.5) handelt es sich um Hydroxycarbonsäuren mit 2 bis 10 Kohlenstoffatomen, Lactone derartiger Säuren, Aminoalkohole des Molekülargewichtsbereichs 61 bis 300 und/oder Aminocarbonsäuren des Molekulargewichtsbereichs 75 bis 400, wie z.B. Dimethylolpropionsäure, Milchsäure, Äpfelsäure, Weinsäure, ε-Caprolacton, Aminoethanol, Aminopropanol, Diethanolamin, Aminoessigsäure, Aminohexansäure.

Bei der Ausgangskomponente II.6) handelt es sich um (cyclo)aliphatische Mono- oder Dicarbonsäuren, die mindestens eine Doppelbindung enthalten, wie z.B. (Meth)acrylsäure, Maleinsäure(anhydrid), Fumarsäure, Crotonsäure, Tetrahydrophthalsäure(anhydrid), natürliche oder synthetische ungesättigte Fettsäuren, wie z.B. Ölsäure, Linolsäure, Konjuenfettsäure, Erdnußölfettsäure, Sojaölfettsäure, Tallölfettsäure, Safflorölfettsäure sowie Gemische dieser oder anderer ungesättigter Mono- oder Dicarbonsäuren.

Bevorzugte Polyesterpolyole II enthalten
II.1) 0 bis 45 Gew.-% Monocarbonsäuren der obengenannten Art, vorzugsweise mit 7 bis 20 Kohlenstoffatomen, wie beispielsweise Benzoesäure, 2-Ethylhexansäure, Isononansäure, hydrierte technische Fettsäuren bzw. deren Gemische (wie z. B. Prifrac® 2950, Prifrac® 2960, Prifrac® 2980 von Unichema International), Stearinsäure und/oder Palmitinsäure,
II.2) 15 bis 56 Gew.-% Di- und/oder Tricarbonsäuren der obengenannten Art bzw. deren Anhydride wie beispielsweise Phthalsäureanhydrid, Hexahydrophthalsäureanhydrid, Isophthalsäure, Terephthalsäure, Adipinsäure, Benzoltricarbonsäure und/oder Dimerfettsäure,
II.3) 25 bis 63 Gew.-% di- und/oder höherfunktionelle Alkohole der obengenannten Art, wie z.B. Ethylenglykol, 1,2-Propylenglykol, 1,6-Hexandiol, 1,4-Cyclohexandimethanol, Neopentylglykol, Trimethylolpropan, Glycerin und/oder Pentaerythrit sowie
II.6) 0,04 bis 50 Gew.-% Mono- oder Dicarbonsäuren, die mindestens eine Doppelbindung enthalten der obengenannten Art, wie z. B. (Meth)acrylsäure, Maleinsäure(anhydrid), Fumarsäure, Tetrahydrophthalsäure(anhydrid), Crotonsäure und natürliche und synthetische, ungesättigte Fettsäuren.

Die Polyesterpolyole II bestehen bevorzugt aus Polykondensationsprodukten der beispielhaft genannten Ausgangskomponenten mit den obengenannten Kenndaten. Zur Einstellung bestimmter Eigenschaften besteht jedoch auch die Möglichkeit, die Polyesterpolyole vor der Pfropfreaktion einer Modifizierungsreaktion, beispielsweise durch Umsetzung mit Mono- oder Polyisocyanaten unter Einbau von Urethangruppen zu modifizieren. Diese Modifizierung kann auch in Gegenwart von niedermolekularen Hydroxy-, Carboxy- oder aminofunktionellen Substanzen erfolgen, die dann unter Kettenverlängerung in das Polymer eingebaut werden. Geeignete niedermolekulare Substanzen sind beispielsweise 1,6-Hexandiol, Neopentylglykol, Stearylalkohol, Dimethylolpropionsäure, 6-Aminohexansäure, Aminoethanol, 1,4-Cyclohexandimethanol.

Geeignete Monoisocyanate sind z. B. Butylisocyanat, Phenylisocyanat und Stearylisocyanat. Geeignete Polyisocyanate sind z.B. Hexamethylendiisocyanat, Isophorondiisocyanat, Toluylendiisocyanat oder höherfunktionelle Uretdion-, Urethan-, Harnstoff-, Biuret- und/oder Isocyanuratgruppen tragende Isocyanate. Im Rahmen der Erfindung soll der Begriff "Polyesterharze", wie er zur Benennung der Komponente II benutzt wird, nicht nur die einfachen Polykondensationsprodukte, sondern auch die Urethangruppen aufweisenden Modifizierungsprodukte der Polykondensationsprodukte umfassen.

Zur Herstellung der Polymerisat-modifizierten Polyesterharze kann beispielsweise wie folgt vorgegangen werden:
Die Komponenten I.1) bis I.4) werden zusammen, teilweise oder getrennt zu der Komponente II, die gegebenenfalls mit einem geeigneten Lösemittel gemischt ist, zudosiert und dort in Gegenwart mindestens eines Polymerisationsinitiators polymerisiert. Zur Erzielung besonderer Eigenschaften können ein oder auch mehrere Monomere schneller, langsamer, später beginnend und/oder früher oder später endend als die üblichen Monomere zugegeben werden.

Als organische Lösemittel werden die für die Herstellung von Polyacrylatharzen übliche und für die Herstellung von wäßrigen Dispersionen geeignete Lösemittel eingesetzt. Als Beispiele für brauchbare Lösemittel seien Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether Propylenglykolmonomethylether, Propylenglykolmonoethylether, Propylenglykolmonobutylether, Dipropylenglykolmonomethylether, Dipropylenglykoldimethylether Dipropylenglykolmonoethylether, Dipropylenglykoldiethylether, Dipropylenglykolmonobutylether und 3-Methyl-3-methoxybutanol, oder deren Gemische genannt.

Es können auch nicht wassermischbare Lösemittel, deren Siedepunkt > 100°C ist oder die mit Wasser ein heterogenes Azeotrop bilden, wie z. B. 2-Butanol, Toluol, Xylol, Butylacetat, Testbenzin, Solvent Naphtha, Methylisobutylketon, Methoxypropylacetat oder Gemische daraus verwendet werden.

Gewünschtenfalls können die verwendeten organischen Lösemittel vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Als Polymerisationsinitiatoren werden ebenfalls die an sich bekannten Verbindungen eingesetzt. Beispielsweise geeignet sind freie Radikale bildende Peroxide, wie z. B. Benzoylperoxid, tert.-Butylperbenzoat, tert.-Butylper-2-ethylhexanoat, Di-tert.-Butylperoxid oder Azoinitiatoren, wie z.B. Azobisisobutyronitril, oder Mischungen daraus genannt.

Die Polymerisation wird bei Temperaturen von 60 - 180°C, vorzugsweise bei 100 bis 160°C durchgeführt.

Zur Erzielung des gewünschten Molekulargewichtes können die üblichen Regler, wie z. B. Dodecylmercaptan oder Mercaptoethanol in Mengen von 0,01 bis 6 % mitverwendet werden.

Während der Polymerisationsreaktion in Gegenwart der Polyesterharze, erfolgt eine zumindest teilweise Verknüpffing der Polyesterharze mit dem sich bildenden Polymerisat im Sinne einer Copolymerisation der (Meth)acrylatmonomere mit den ungesättigten Gruppen des Polyesterharzes.

Die in den Polymerisat-modifizierten Polyesterharzen vorliegenden freien Carboxylgruppen werden vor oder während des folgenden Dispergierschrittes durch Zugabe von mindestens einer Base zu 25 bis 100 %, vorzugsweise zu 40 bis 100 % in Carboxylatgruppen überführt. Geeignete Basen sind beispielsweise Ammoniak, N-Methylmorpholin, Triethylamin, Dimethylethanolamin, Dimethylisopropanolamin, Triethanolamin, Triisopropylamin, 2-Amino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid. Bevorzugte Neutralisationsmittel sind Ammoniak, Dimethylethanolamin und Dimethylisopropanolamin.

Im Dispergierschritt (unter "Dispergierschritt" ist die Überführung der Polymerisat-modifizierten Polyesterharze in eine wäßrige Lösung und/oder Dispersion zu verstehen. Im allgemeinen enthalten diese wäßrigen Systeme sowohl gelöste als auch dispergierte Anteile) kann alternativ das Wasser/Neutralisa-tionsmittelgemisch zum Harz, das Harz zum Wasser/Neutralisationsmittelgemisch, das Wasser zum Harz/Neutralisationsmittelgemisch oder das Harz/Neutralisationsmittelgemisch zum Wasser gegeben werden. Die Dispergierbarkeit der Harze in Wasser kann gewünschtenfalls durch Mitverwenden von externen, ionischen oder nichtionischen Emulgatoren, wie z.B. ethoxyliertes Nonylphenol beim Dispergieren, verbessert werden.

Der Dispergierschritt wird üblicherweise bei 40 bis 120°C durchgeführt. Die Carboxylat- und Hydroxylgruppen enthaltenden, wäßrigen Bindemittelkomponenten A) weisen Festkörpergehalte (= Gehalt an gelösten und/oder dispergierten, mit Vinylmonomeren gepfropften Polyesterharzen) von 25 bis 65, vorzugsweise von 30 bis 55 Gew.-% auf. Der Anteil an organischen Lösemitteln beträgt weniger als 8 Gew.-%, vorzugsweise weniger als 5 Gew.-%.

Die nach dem Dispergierschritt vorliegende wäßrige Lösung oder Dispersion der Polymerisat-modifizierten Polyesterharze kann als solche als Komponente A) der erfindungsgemäßen Bindemittelkombinationen Verwendung finden. Den oben bereits gemachten Ausführungen entsprechend, ist es jedoch auch möglich, die Dispersion mit anderen organischen Polyhydroxylverbindungen, insbesondere mit wasserlöslichen, mehrwertigen Alkoholen der oben beispielhaft genannten Art abzumischen, wobei jedoch die oben gemachten Angaben bezüglich der Mengenverhältnisse beachtet werden sollten. Wie bereits oben ausgeführt, besteht die in der Komponente A) gelöst und/oder dispergiert vorliegende Polyolkomponente zumindest zu 51 Gew.-%, vorzugsweise zumindest zu 80 Gew.-% und besonders bevorzugt zu 100 % Pfropfcopolymerisaten der genannten Art.

Bei den erfindungsgemäßen Bindemittelkombinationen handelt es sich um Kombinationen aus A) wäßrigen Lösungen oder Dispersionen einer wasserverdünnbaren organischen Polyolkomponente der genannten Art und B) hitzeaktivierbaren Vernetzerharzen. Unter "hitzeaktivierbaren Vernetzerharzen" sind im Rahmen der Erfindung die üblicherweise in Einbrennlacken eingesetzten Aminoharze bzw. Polyisocyanate mit blockierten Isocyanatgruppen bzw. beliebige Gemische derartiger Vernetzerharze zu verstehen.

Geeignete Aminoharze sind beispielsweise wasserverdünnbare bzw. -dispergierbare Melamin- bzw. Harnstoff-Formaldehyd-Kondensationsprodukte, wie sie z. B. bei D.H. Solomon, The Chemistry of Organic Filmformers, S. 235 ff., John Wiley & Sons, Inc., New York, 1967, beschrieben sind. Die Melaminharze können jedoch auch ganz oder teilweise durch andere vernetzende Aminoplaste, wie sie z. B. in "Methoden der organischen Chemie" (Houben-Weyl), Bd. 14/2, Teil 2, 4. Auflage, Georg Thieme Verlag, Stuttgart 1963, S. 319 ff. beschrieben sind, ersetzt werden.

Geeignete Polyisocyanatvernetzer sind die auf dem Lacksektor üblichen blockierten Polyisocyanate, beispielsweise auf Basis von Isophorondiisocyanat, Hexamethylendiisocyanat, 1,4-Diisocyanatcyclohexan, Bis-(4-isocyanato-cyclohexyl)methan, 1,3-Diisocyanatobenzol, 1,4-Diisocyanatobenzol, 2,4-Diisocyanato-1-methylbenzol, 2,4-Bisisocyanatomethyl-1,5-dimethylbenzol, Bis-(4-isocyanatophenyl)-propan, Isocyanuratgruppen aufweisenden Polyisocyanaten auf Basis von 1,6-Diisocyanatohexan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, in isomeren Propandiolen oder Butandiolen oder beliebigen Gemischen derartiger Polyhydroxylverbindungen andererseits, jeweils mit blockierten Isocyanatgruppen. Auch blockierte NCO-Prepolymere, der in EP-A-05 76 952 beschriebenen Art, die im allgemeinen einen Gehalt an blockierten Isocyanatgruppen (berechnet als NCO) von 2 bis 8 Gew.-% aufweisen, können als Komponente B) oder als Teil der Komponente B) zum Einsatz kommen.

Als Blockierungsmittel werden die bekannten monofunktionellen Blockierungsmittel eingesetzt, wie z.B. ε-Caprolactam, Malonsäurediethylester, Acetessigsäureethylester oder Oxime wie Butanonoxim. Butanonoxim ist das bevorzugte Blockierungsmittel.

Die bevorzugten Polyisocyanatvernetzer weisen eine mittleren NCO-Funktionalität, bezogen auf die reversibel blockierten Isocyanatgruppen von 2,0 bis 5,0, insbesondere 2,0 bis 3,0 auf und sind durch den Einbau von Polyetherstrukturen oder durch Salzgruppen, die durch zumindest teilweise Neutralisation von eingebauten Carboxylgruppen entstanden sind, hydrophiliert, obwohl dies nicht unbedingt erforderlich ist, da die Komponente A) auch die Funktion eines Emulgators für die Komponente B) übernehmen kann.

Zur Herstellung der erfindungsgemäßen Bindemittelkombinationen werden die Vernetzerharze B) bzw. ihre wäßrigen Lösungen oder Dispersionen mit der wäßrigen Komponente A) vermischt. Bei alleiniger Verwendung von blockierten Polyisocyanaten als Vernetzerharz B) wird das Mischungsverhältnis der beiden Komponenten A) und B) im allgemeinen so gewählt, daß das Äquivalentverhältnis von blockierten Isocyanatgruppen zu alkoholischen Hydroxylgruppen bei 0,5 : 1 bis 1,5 : 1, vorzugsweise bei 0,7 : 1 bis 1,1 : 1 liegt. Da die Art der zum Einsatz gelangenden Komponenten A) und B), den oben gemachten Ausführungen entsprechend, starken Schwankungen unterliegen kann, kann auch das Gewichtsverhältnis der Komponenten A) und B) innerhalb der breiten, oben genannten Bereiche schwanken. Bei Verwendung von Melaminharzen als Komponente B), besteht das Gemisch der Komponenten A) und B) im allgemeinen zu 50 bis 90 Gew.-% aus Komponente A) und zu 10 bis 50 Gew.-% aus Komponente B).

Erfindungsgemäße Bindemittelkombinationen, die Melaminharze und/oder blockierte Polyisocyanate als Vernetzerharze enthalten bzw. Beschichtungsmittel auf Basis derartiger Bindemittelkombinationen, stellen hitzevernetzbare Einkomponenten-Systeme dar, die bei Raumtemperatur lagerfähig sind.

Vor der Zugabe der Vernetzerkomponente B) können der Komponente A) die üblichen Hilfs- und Zusatzmittel der Lacktechnologie einverleibt werden. Hierzu gehören beispielsweise Entschäumungsmittel, Verdickungsmittel, Verlaufshilfsmittel, Pigmente, Dispergierhilfsmittel für die Pigmentverteilung, Lichtschutzmittel, Antioxidantien und dergleichen.

Die Herstellung von Beschichtungsmitteln, die als Bindemittel erfindungsgemäße, wäßrige Bindemittelkombinationen enthalten, erfolgt somit vorzugsweise in einem mehrstufigen Verfahren, wobei man z. B. in einem ersten Reaktionsschritt ein Carboxylat- und Hydroxylgruppen aufweisendes Polymerisat-modifiziertes Polyesterharz in Wasser löst und/oder dispergiert, gegebenenfalls die so erhaltene wäßrige Lösung oder Dispersion mit weiteren wasserverdünnbaren Polyhydroxylverbindungen der unten beispielhaft genannten Art und/oder den üblichen Hilfs- und Zusatzmitteln der Lacktechnologie vermischt und anschließend in einem dritten Reaktionsschritt die Vernetzerkomponente B) in der vorliegenden wäßrigen Lösung bzw. Dispersion löst bzw. emulgiert.

In den erfindungsgemäßen Beschichtungsmitteln liegen die in Wasser dispergierbaren bzw. in Wasser löslichen Carboxylat- und Hydroxylgruppen enthaltenden, Polymerisat-modifizierten Polyesterharze normalerweise als wesentliche Bindemittelkomponente vor. Außerdem können gegebenenfalls noch weitere hydroxyfunktionelle Lackharze C) vorliegen, deren Menge, bezogen auf Festkörper, bis zu 50, vorzugsweise bis zu 25 Gew.-% der Menge der Komponente A) betragen kann.

Gegebenenfalls mitverwendete, hydroxyfunktionelle Lackharze C) sind beispielsweise wasserverdünnbare, nichtionische oder anionische Bindemittel des Standes der Technik auf Polyepoxid-, Polyester-, Polyurethan-, Polyether-, Polyamin-, Polyolefin-, Polydien- und/oder Poly(meth)acrylatbasis, wobei jeweils durch eine Vorprüfung die Verträglichkeit ermittelt werden muß.

Zu den bevorzugten Anwendungsgebieten für die erfindungsgemäßen Bindemittelkombinationen gehört ihre Verwendung in klaren oder pigmentierten Einbrenn-Decklacken für Substrate, die einer relativ hohen thermischen Belastung ausgesetzt sind, wie z.B. Heizkörper oder Nachtspeicheröfen. Die Bindemittelkombinationen eignen sich aber auch für die Verwendung in klaren oder pigmentierten Einbrenn-Decklacken, wie sie bei der Automobil-Lackierung oder der industriellen Metall-Lackierung verwendet werden. Die erfindungsgemäßen Bindemittelkombinationen eigenen sich ebenfalls für wäßrige Kunststoff-, Folien-, Metall- oder Holzlacke sowie als Bindemittelkomponente für Grundlacke für mineralische Substrate. Auch die Herstellung von festkörperreichen Einschichtdecklacken unter Verwendung der erfindungsgemäßen Bindemittelkombinationen ist möglich.

In den nachfolgenden Beispielen beziehen sich alle Prozentangaben, falls nicht anders angegeben, auf Gewichtsprozente.

### Beispiel 1

### Herstellung eines Polyesters II

1710 g Trimethylolpropan, 5310 g Neopentylglykol, 5524 g Phthalsäureanhydrid, 332 g Maleinsäureanhydrid und 2121 g Isophthalsäure in eine Apparatur mit Rührer, Thermometer, Heizung und Destillationsaufsatz einwiegen und in 1 Stunde auf 140°C aufheizen. Anschließend in 6 Stunden auf 200°C aufheizen und bei 200°C so lange unter Wasserabspaltung kondensieren, bis die Auslaufviskosität (DIN Becher 4) 55%ig in Methoxypropylacetat bei 23°C auf 52 bis 55 Sekunden angestiegen ist.

Das so erhaltene Produkt hatte eine Auslaufviskosität von 52,5 Sekunden (DIN Becher 4), eine Säurezahl von 6,7 mg KOH/g Substanz und eine OH-Zahl von 140 mg KOH/g Substanz.

### Herstellung eines in Wasser dispergierten, Polymerisat-modifizierten Polyesterharzes (= Komponente A)

500,0 g des oben beschriebenen Polyesters II und 108,0 g Butylglykol in eine Apparatur mit Rührer, Thermometer, Heizung und Kühlvorrichtung einwiegen und auf 120°C aufheizen. Innerhalb von 2 Stunden eine Mischung von 430,0 g n-Butylacrylat, 240 g Methylmethacrylat, 300,0 g Hydroxyethylmethacrylat und 10,0 g n-Dodecylmercaptan zudosieren. Im Anschluß daran, innerhalb von 1 Stunde eine Mischung von 215,0 n-Butylacrylat, 120,0 g Methylmethacrylat, 150,0 g Hydroxyethylmethacrylat, 5,0 g n-Dodecylmercaptan und 45,0 g Acrylsäure zudosieren. Parallel zu den Monomerenmischungen werden innerhalb von 4 Stunden 53,6 g tert.-Butylper-2-ethylhexanoat (70%ig in Kohlenwasserstoffgemisch) zugegeben. Nach Ende der Peroxidzugabe 2 Stunden bei 120°C nachrühren, auf 100°C abkühlen, 48,9 g Dimethylethanolamin zugeben und homogenisieren. Anschließend mit 2336,0 g Wasser dispergieren. Die Dispersion hat einen Festgehalt von 45%.

Das so erhaltene Polymerisat-modifizierte Polyesterharz hat eine OH-Zahl von 129 mg KOH/g Festharz und eine Säurezahl von ca. 26 mg KOH/g Festharz. Der Neutralisationsgrad der Dispersion liegt bei ca. 58 %.

### Beispiel 2

### Herstellung eines Polyesters II

In ein 6-l-Reaktionsgefäß mit Rühr-, Kühl- und Heizvorrichtung und Wasserabscheider 1312 g Hexahydrophthalsäureanhydrid, 144 g Tetrahydrophthalsäureanhydrid, 1703 g Trimethylolpropan und 1812 g eines gesättigten C₁₄/C₁₆-Fettsäuregemisches (Prifrac® 2950, Unichema International) einwiegen und unter Durchleiten von Stickstoff in einer Stunde auf 140°C aufheizen. Dann in 8 Stunden auf 220°C aufheizen und so lange unter Wasserabspaltung kondensieren, bis der Polyester II eine Gesamtsäurezahl von 3,0 mg KOH/g Substanz und eine OH-Zahl von 137 mg KOH/g Substanz aufweist.

### Herstellung einer wäßrigen Dispersion eines Polymerisat-modifizierten Polyesterharzes (= Komponente A)

In einem 2-l-Reaktionsgefäß mit Rühr-, Kühl- und Heizvorrichtung 166,7 g des obengenannten Polyesters II vorlegen und auf 135°C aufheizen. Innerhalb von 3 Stunden eine Mischung aus 225,0 g n-Butylacrylat, 25,0 g Methacrylsäure, 50,0 g Styrol, 100,0 g Hydroxyethylmethacrylat, 100,0 g Methylmethacrylat und 5,0 g n-Dodecylmercaptan zudosieren. Parallel zu der Monomerenmischung innerhalb von 4 Stunden 35,7 g tert.-Butylper-2-ethylhexanoat (70%ig in Kohlenwasserstoffgemisch) zugeben. Nach dem Ende der Peroxidzugabe 2 Stunden bei 135°C nachrühren, das gepfropfte Polyesterharz mit 17,7 g Dimethylethanolamin neutralisieren und mit 1045,0 g Wasser dispergieren. Durch Zugabe von Wasser wird ein Festgehalt von ca. 33,4 % eingestellt.

Das so erhaltene Polymerisat-modifizierte Polyesterharz hat eine OH-Zahl von ca. 103 mg KOH/g Festharz und eine Säurezahl von ca. 26 mg KOH/g Festharz. Der Neutralisationsgrad beträgt ca. 61 %.

### Beispiel 3 (in Analogie zu EP-A-03 91 271)

### Herstellung eines Polyesters II

336,7 g Trimethylolpropan, 366,8 Adipinsäure und 297 g Hexandiol werden mit 5 g unterphosphoriger Säure in einem mit Rührer, Wasserabscheider, Thermometer und Rückflußkühler versehenen 2-Liter-Dreihalskolben bei 180°C bis 230°C in der Schmelze auf eine Säurezahl von 20mg KOH/g Festharz verestert. Anschließend wird unter Vakuum bis zu einer Säurezahl < 1,5 mg KOH/g Substanz kondensiert. Das so erhaltene Produkt hat einen Einbrennrückstand von 94,6 % (1 h, 150°C), eine Säurezahl von 0,9 mg KOH/g Substanz und eine Hydroxylzahl von 347 mg KOH/g Substanz.

### Herstellung eines in Wasser dispergierten, Polymerisat-modifizierten Polyesterharzes (= Komponente A)

717 g des obengenannten Polyesters II mit 311 g Butylglykol in einem mit Rührer, Rückflußkühler, Tropftrichter und Thermometer versehenen 4-Liter-Dreihalskolben vorlegen und auf 140°C aufheizen. Anschließend in 4 Stunden eine Mischung aus 552 g Butandiolmonoacrylat, 946 g tert.-Butylacrylat, 74 g Acrylsäure und 100 g tert.-Butylperbenzoat zutropfen und 4 Stunden nachpolymerisieren. Das Produkt hat einen Einbrennrückstand von 83,4 % (1 h, 150°C). Das Harz wird in Anlehnung an EP 391 271 mit 233,4 g Butylglykol, 223,4 g Dimethylethanolamin und 297,3 g Wasser versetzt.

Das so erhaltene Polymerisat-modifizierte Polyesterharz hat hat einen Einbrennrückstand von 66,3 %, eine OH-Zahl von 227 mg KOH/g Festharz und eine Säurezahl von 29,5 mg KOH/g Festharz. Der Neutralisationsgrad beträgt ca. 200 %.

### Beispiel 4 (zum Vergleich Polyester aus Beispiel 3 mit (Meth)acrylatmischung aus Beispiel 1 kombiniert)

### Herstellung eines Polyesters II

336,7 g Trimethylolpropan, 366,8 Adipinsäure und 297 g Hexandiol werden mit 5 g unterphosphoriger Säure in einem mit Rührer, Wasserabscheider, Thermometer und Rückflußkühler versehenen 2-Liter-Dreihalskolben bei 180°C bis 230°C in der Schmelze auf eine Säurezahl von 20 KOH/g Festharz verestert. Anschließend wird unter Vakuum bis zu einer Säurezahl < 1,5 mg KOH/g Substanz kondensiert. Das so erhaltene Produkt hat einen Einbrennrückstand von 94,6 % (1 h, 150°C), eine Säurezahl von 0,9 mg KOH/g Substanz und eine Hydroxylzahl von 347 mg KOH/g Substanz.

### Herstellung eines in Wasser dispergierten, Polymerisat-modifizierten Polyesterharzes (= Komponente A)

500,0 g der oben beschriebenen Polyesters II und 108,0 g Butylglykol in eine Apparatur mit Rührer, Thermometer, Heizung und Kühlvorrichtung einwiegen und auf 120°C aufheizen. Innerhalb von 2 Stunden eine Mischung von 430,0 g n-Butylacrylat, 240 g Methylmethacrylat, 300,0 g Hydroxyethylmethacrylat und 10,0 g n-Dodecylmercaptan zudosieren. Im Anschluß daran, innerhalb von 1 Stunde eine Mischung von 215,0 n-Butylacrylat, 120,0 g Methylmethacrylat, 150,0 g Hydroxyethylmethacrylat, 5,0 g n-Dodecylmercaptan und 45,0 g Acrylsäure zudosieren. Parallel zu den Monomerenmischungen werden innerhalb von 4 Stunden 53,6 g tert.-Butylper-2-ethylhexanoat (70%ig in Kohlenwasserstoffgemisch) zugegeben. Nach Ende der Peroxidzugabe 2 Stunden bei 120°C nachrühren, auf 100°C abkühlen, 48,9 g Dimethylethanolamin zugeben und homogenisieren. Anschließend mit 2336,0 g Wasser dispergieren. Die Dispersion hat einen Festgehalt von 45%.

Das so erhaltene Polymerisat-modifizierte Polyesterharz hat eine OH-Zahl von 180 mg KOH/g Festharz und eine Säurezahl von 19,6 mg KOH/g Festharz. Der Neutralisationsgrad der Dispersion liegt bei ca. 76 %.

### Anwendungsbeispiel 1 (Klarlack)

Zur Herstellung des Klarlacks werden 11,9 Gew.-Teile des Vernetzerharzes Cymel® 3271) vorgelegt, mit 13,0 Gew.-Teilen Butyldiglykol verdünnt und unter Rühren mit 2,2 Gew.-Teilen Tinuvin® 1130²⁾ und 1,1 Gew.-Teilen Tinuvin® 292²⁾ versetzt. Anschließend werden unter Rühren 100,0 Gew.-Teile der Dispersion A aus Beispiel 1 langsam zugegeben. Durch Zugabe von Wasser wird eine Auslaufviskosität (DIN Becher 4) von ca. 30 Sekunden eingestellt.

Das Gewichtsverhältnis Polyol: Aminovernetzer beträgt 8 : 2
Härtungsbedingungen: Vortrocknen 10 Min. 80°C, Einbrennen 20 Min. 140°C.
Anmerkung:
¹⁾Cymel = Handelsprodukt der Fa. Cyanamid, Aminovernetzerharz
²⁾Tinuvin = Handelsprodukt der Fa. Ciba Geigi, Lichtschutzmittel

### Anwendungsbeispiel 2 (Klarlack) (Vergleich)

Zur Herstellung des Klarlacks werden 11,9 Gew.-Teile des Vernetzerharzes Cymel® 327¹⁾ vorgelegt, mit 13,0 Gew.-Teilen Butyldiglykol verdünnt und unter Rühren mit 2,2 Gew.-Teilen Tinuvin® 1130²⁾ und 1,1 Gew.-Teilen Tinuvin® 292²⁾ versetzt. Anschließend werden unter Rühren 100,0 Gew.-Teile der Dispersion A aus Beispiel 4 langsam zugegeben. Durch Zugabe von Wasser wird eine Auslaufviskosität (DIN Becher 4) von ca. 30 Sekunden eingestellt.

Das Gewichtsverhältnis Polyol: Aminovernetzer beträgt 8 : 2
Härtungsbedingungen: Vortrocknen 10 Min. 80°C, Einbrennen 20 Min. 140°C.

### Prüfergebnisse Klarlack:

| | Anwendungsbeispiel 1 (erfindungsgemäß) | Anwendungsbeispiel 2 (Vergleich) |
|---|---|---|
| Glanz 20° | 89 | 84 |
| Pendeldämpfung (nach König) | 196˝ | 69˝ |
| | | |

| Beständigkeiten³⁾: | | |
|---|---|---|
| Xylol⁴⁾ (1′): | 0 | 5 |
| Methoxypropylacetat⁴⁾ (1′): | 0 | 5 |
| H₂SO₄⁵⁾ (24 h): | 3 | 5 |
| Benzinfestigkeit⁴^{,}⁶⁾ (10′): | 0 | 5 |
| | | |

| Thermovergilbung⁷⁾ | | |
|---|---|---|
| ΔE 20′ 140°C | 0,6 | 0,8 |
| ΔE 20′ 140°C + 30′ 160°C | 0,5 | 1,4 |

| | | |
|---|---|---|
| Anmerkung: ³⁾ Beständigkeiten: 0 - 5,0 = nicht verändert, 5 = sehr stark verändert | | |
| ⁴⁾ Ein mit dem entsprechenden Lösemittel getränkter Wattebausch wird auf den Lackfilm aufgebracht. Die Abmusterung erfolgt sofort nach der angegebenen Einwirkzeit. | | |
| ⁵⁾ Batteriesäurebeständigkeit nach einem Haustest von General Motors: 1 Tropfen 38%ige H₂SO₄ wird auf den Lackfilm aufgebracht, Einwirkzeit 24 Stunden bei 23°C. | | |
| ⁶⁾ Mit Standardprüfkraftstoff nach Fachausschuß Mineralöl- und Brennstoffnormung (DIN 51604, Teil I) | | |
| ⁷⁾ Farbveränderung nach CIELAB (DIN 6174) | | |

### Anwendungsbeispiel 3 (Weißlack)

10,3 Gew.-Teile Dispersion A aus Beispiel 1, 2,1 Gew.-Teile 10%ige, wäßrige Dimethylethanol-amin-Lösung, 7,8 Gew.-Teile Wasser und 24,8 Gew.-Teile Bayertitan® R-KB-4⁸⁾ werden in ei-ner Perlmühle angerieben.

Zur Auflackung werden 34,4 Gew.-Teile Dispersion A aus Beispiel 1, 5,5 Gew.-Teile Cymel® 327¹⁾, 0,5 Gew.-Teile Byk® 301⁹⁾ und 14,6 Gew.-Teile Wasser zugegeben. Durch Zugabe von Wasser wird eine Auslaufviskosität von 30 Sekunden (DIN-Becher 4) eingestellt
Das Gewichtsverhältnis Polyol : Aminovernetzer beträgt 8 : 2.
Das Verhältnis Bindemittel : Pigment beträgt 1 : 1
Härtungsbedingungen: Ablüftzeit 10′ 23°C, Einbrennen 10′ 160°C.
Anmerkung:
⁸⁾ Titandioxidpigment der Fa. Bayer AG
⁹⁾ Verlaufsmittel der Fa. Byk Chemie

### Anwendungsbeispiel 4 (Weißlack)(Vergleich)

5,7 Gew.-Teile Dispersion A aus Beispiel 3, 10,0 Gew.-Teile Wasser und 18,3 Gew.-Teile Bayertitan® R-KB-4⁸⁾ werden in einer Perlmühle angerieben.

Zur Auflackung werden 16,4 Gew.-Teile Dispersion A aus Beispiel 3, 4,1 Gew.-Teile Cymel® 327¹⁾, 0,4 Gew.-Teile Byk® 301⁹⁾ und 45,2 Gew.-Teile Wasser zugegeben. Durch Zugabe von Wasser wird eine Auslaufviskosität von 30 Sekunden (DIN-Becher 4) eingestellt
Das Gewichtsverhältnis Polyol : Aminovernetzer beträgt 8 : 2.
Das Verhältnis Bindemittel : Pigment beträgt 1 : 1
Härtungsbedingungen: Ablüftzeit 10′ 23°C, Einbrennen 10′ 160°C.

### Prüfergebnisse Weißlack:

| | Anwendungsbeispiel 3 (erfindungsgemäß) | Anwendungsbeispiel 4 (Vergleich) |
|---|---|---|
| Glanz 20°: | 71 | 28 |
| Pendeldämpfung nach König: | 153˝ | 55˝ |
| MEK-Wischtest (100 x): | ohne Befund | weich |
| | | |

| Thermovergilbung⁷⁾: | | |
|---|---|---|
| ΔE 1 h 180°C | 0,4 | 0,4 |
| ΔE 96 h 180°C | 3,2 | 22,1 |

## Patentansprüche

1. Wäßrige Bindemittelkombination für vergilbungsarme Einbrennlacke, bestehend im wesentlichen aus:
A) 20 - 95 Gew.-% einer in Form einer wäßrigen Lösung oder Dispersion vorliegenden, wasserverdünnbaren, organischen Polyolkomponente und
B) 5 - 80 Gew.-% mindestens eines hitzeaktivierbaren Vernetzerharzes,
dadurch gekennzeichnet, daß die in A) vorliegende Polyolkomponente im wesentlichen aus mindestens einem Carboxylat- und Hydroxylgruppen aufweisenden, Polymerisat-modifizierten Polyesterharzes besteht, welches durch Polymerisation von olefinisch ungesättigten Monomeren in Gegenwart eines zur Copolymerisation mit den Monomeren befähigten ungesättigten Polyesterharzes hergestellt worden ist, wobei sich die Gewichtsprozentangaben jeweils auf den Gesamtfestkörpergehalt von A) und B) beziehen und zusammen 100 % ergeben.

2. Wäßrige Bindemittelkombination gemäß Anspruch 1, dadurch gekennzeichnet, daß das Polymerisat-modifizierte Polyesterharz der Bindemittelkomponente A) ein Molekulargewicht Mn von 1000 bis 50000, eine Hydroxylzahl von 20 bis 300 mg KOH/g Substanz und eine Säurezahl von 10 bis 80 mg KOH/g Substanz aufweist, wobei 25 bis 100 % der diese Säurezahl bewirkenden Carboxylgruppen in der Carboxylatform vorliegen und das Umsetzungsprodukt aus
I. 99 - 2 Gew.-% einer Monomerenmischung aus:
I.1) 1 - 100 Gew.-% α,β-ungesättigter Mono- und/oder Dicarbonsäure mit 3 bis 16 C-Atomen,
I.2) 0 - 70 Gew.-% hydroxyfunktioneller Alkylester der (Meth)acrylsäure mit gegebenenfalls Ethergruppen aufweisenden Hydroxyalkylresten mit 2 bis 12 Kohlenstoffatomen,
I.3) 0 - 98 Gew.-% (Meth)acrylsäure(cyclo)alkylester mit 1 bis 20 C-Atomen im Alkylrest und
I.4) 0 - 80 Gew.-% anderer copolymerisierbarer Verbindungen,
wobei sich die zu I.1) bis I.4) gemachten Prozentangaben zu 100 % ergänzen, und
II. 1 - 98 Gew.-% eines Polyesterpolyols mit einer Hydroxylzahl von 10 bis 500 mg KOH/g Substanz, einer Säurezahl von < 30 mg KOH/g Substanz und einem Gehalt an Doppelbindungen (berechnet als C=C, Molekulargewicht = 24) von 0,01 bis 15 Gew.-%
darstellt, wobei sich die zu I. und II. gemachten Prozentangaben zu 100 % ergänzen, und daß die Vernetzerkomponente B) ein hitzeaktivierbares Aminoharz, ein blockiertes Polyisocyanatharz oder eine Mischung daraus ist.

3. Wäßrige Bindemittelkombination gemäß Anspruch 1 und 2, dadurch gekennzeichnet, daß das Polymerisat-modifizierte Polyesterharz der Komponente A) ein Molekulargewicht Mn von 1500 bis 25000, eine Hydroxylzahl von 45 bis 200 mg KOH/g Substanz und eine Säurezahl von 14 bis 45 mg KOH/g Substanz aufweist, wobei 40 bis 100 % der dieser Säurezahl bewirkenden Carboxylgruppen in der Carboxylatform vorliegen und das Umsetzungsprodukt aus
I. 95 - 10 Gew.-% einer Monomerenmischung aus
I.1) 1 - 25 Gew.-% α,β-ungesättigter Mono- oder Dicarbonsäure,
I.2) 3 - 50 Gew.-% hydroxyfunktioneller Ester der (Meth)acrylsäure,
I.3) 5 - 80 Gew.-% (Meth)acrylsäurealkylester mit 1 bis 18 C-Atomen im Alkylrest und
I.4) 0 - 60 Gew.-% anderer copolymerisierbarer Verbindungen,
wobei sich die zu I.1) bis I.4) gemachten Prozentangaben zu 100 % ergänzen und
II. 5 - 90 Gew.-% eines Polyesterpolyols mit einer Hydroxylzahl von 80 bis 350 mg KOH/g Substanz, einer Säurezahl von 1,0 -15 mg KOH/g Substanz und einem Gehalt an Doppelbindungen von 0,01 bis 10 %
darstellt, wobei sich die zu I. und II. gemachten Prozentangaben zu 100 % ergänzen.

4. Wäßrige Bindemittelkombination gemäß Anspruch 1 bis 3, dadurch gekennzeichnet, daß das zur Copolymerisation befähigte ungesättigte Polyesterharz das gegebenenfalls Urethan-modifizierte Umsetzungsprodukt von
II.1) 0 bis 60 Gew.-% an gesättigten aliphatischen, oder aromatischen Monocarbonsäuren,
II.2) 10 bis 65 Gew.-% an gesättigten aliphatischen oder aromatischen Di-, Tri-, Tetracarbonsäuren und/oder an einer entsprechenden Menge an Anhydriden derartiger Säuren,
II.3) 15 bis 70 Gew.-% an di- und/oder höherfunktionellen Alkoholen,
II.4) 0 bis 30 Gew.-% einwertiger Alkoholen,
II.5) insgesamt 0 bis 25 Gew.-% an Hydroxycarbonsäuren, Lactonen, Aminoalkoholen und/oder Aminocarbonsäuren und
II.6) 0,04 bis 60 Gew.-% an (cyclo)aliphatischen, olefinisch ungesättigten Mono- oder Dicarbonsäuren
darstellt, wobei sich die zu II.1) bis II.6) gemachten Prozentangaben zu 100 % ergänzen.

5. Wäßrige Bindemittelkombination gemäß Anspruch 1 und 2, dadurch gekennzeichnet, daß als Vernetzerkomponente B) ein wasserverdünnbares oder in Wasser dispergierbares, hitzehärtbares Aminoharz, ein wasserverdünnbares oder in Wasser dispergierbares, blockiertes Polyisocyanatharz oder eine Mischung daraus eingesetzt wird.

6. Verwendung der Bindemittelkombinationen gemäß Anspruch 1 bis 5, gegebenenfalls in Kombination mit anderen Hydroxylgruppen aufweisenden Lackharzen in, gegebenenfalls die üblichen Hilfs- und Zusatzstoffe der Lacktechnologie enthaltenden, hitzehärtbaren Beschichtungsmitteln.

7. Verwendung gemäß Anspruch 6 in hitzehärtenden Klarlacken.

8. Verwendung gemäß Anspruch 7 in hitzehärtbaren Lacken zur Beschichtung von Gegenständen, die einer hohen thermischen Belastung ausgesetzt sind.
